# EUROPÄISCHE PATENTSCHRIFT

(11) **EP 0 382 709 B1**
(45) Veröffentlichungstag und Bekanntmachung des Hinweises auf die Patenterteilung: **27.07.1994**
(21) Anmeldenummer: 90890022.8
(22) Anmeldetag: 02.02.1990
(51) Int. Cl.: C23G 1/36, C01G 9/00

(54) **Verfahren zum Aufarbeiten von sauren Fe-haltigen Lösungen, insbesondere Abfallbeizlösungen**
Process for working up acidic iron-containing solutions, in particular used pickling liquors
Procédé d'élaboration de solutions acides contenant du fer, en particulier de solutions de décapages usées

(30) Priorität: 06.02.1989 AT 231/89
(43) Veröffentlichungstag der Anmeldung: 16.08.1990
(73) Patentinhaber: PRIOR ENGINEERING AG, 8032 Zürich (CH)
(72) Erfinder: Prior, Adalbert, Dr., A-6840 Götzis (AT); Ritter, Franz, Dipl.-Chem., D-58097 Hagen (DE)
(74) Vertreter: Collin, Hans, Dipl.-Ing. Dr.

(56) Entgegenhaltungen:
- EP-A- 0 141 313
- FR-A- 2 259 155
- FR-A- 2 348 728
- US-A- 4 149 951
- US-A- 4 582 691
- TECHNISCHE MITTEILUNGEN KRUPP. FORSCHUNGSBERICHTE, Band 43, Nr. 1, Juli 1985, Seiten 9-13, Essen, DE; U. SCHEFFLER et al.: "Verarbeitung komplexer, zinkhaltiger Rohstoffe unter Einsatz der Solventextraktion"

## Beschreibung

Die Erfindung betrifft ein Verfahren zum Aufarbeiten von sauren Fe-haltigen Lösungen, insbesondere Abfallbeizlösungen, durch Flüssig/Flüssigextraktion mit organischen Ionentauschern.

Ein derartiges Verfahren zum Aufbereiten verbrauchter, Fe-Ionen enthaltender Behandlungsflüssigkeiten für metallhaltige Werkstoffe oder Erze durch Flüssig/Flüssigextraktion ist aus der EP-A 0 058 148 bekannt. Dieses Verfahren ist auf die Rückgewinnung metallionenfreier anorganischer Säuren gerichtet und dabei erfolgt zuerst die Freisetzung der an die Eisenionen gebundenen anorganischen Säuren mittels eines wasserunlöslichen, flüssigen Kationentauschers (z.B. saure Phosphorsäureester wie Diäthylhexylphosphat oder Dibutylphosphat), der die Fe-Ionen bindet. Anschließend werden die freien Säuren durch Zusatz eines organischen Adduktbildners (TBP, DBBP, TOP, TOPO) aus der wässerigen Lösung extrahiert und endlich werden die Addukte unter Erhalt der reinen Säuren wieder gespalten.

Aus der US-A-4 582 691 ist es bekannt saure metallhaltige Lösungen, z.B. enthaltend Fe³⁺, Zn²⁺, Fe²⁺, Cu²⁺ und/oder Ni²⁺, durch Flüssig/Flüssigextraktion mit organischen Ionenaustauschern aufzubereiten. In diesem Verfahren werden kontinuierlich zuerst Fe³⁺ bei niedrigstem pH-Wert, sodann die anderen Komponenten bei ansteigendem pH-Wert, in einer vorbestimmten Reihenfolge, extrahiert.

Lösungen der genannten Art fallen im industriellen Maßstab an und es bestand die Aufgabe, ein Verfahren zu schaffen, bei dem diese Lösungen im Hinblick auf ihren Zn-Gehalt aufgearbeitet werden können.

Zur Lösung dieser Aufgabe wird im erfindungsgemäßen Verfahren aus Lösungen, die auch Zn enthalten, der Fe- und der Zn-Gehalt gemeinsam in einem ersten Extraktionsschritt extrahiert, dadurch gekennzeichnet, daß der dabei erhaltene erste, mit Fe³⁺, Fe²⁺ und Zn²⁺ beladene organische Extrakt zu einer erneuten Extraktion von frischer Lösung eingesetzt wird, bei der der Fe²⁺-Gehalt des ersten Extraktes gegen den Zn²⁺-Gehalt der frischen Lösung ausgetauscht wird, und daß aus dem zweiten organischen Extrakt der Zn²⁺-Gehalt durch Strippen mit Säure abgetrennt wird.

Vorteilhaft wird dabei die erneute Extraktion bei einem gegenüber dem pH-Wert der ersten Extraktion veränderten pH-Wert durchgeführt.

Insbesondere wird der zweite organische Extrakt mit Schwefelsäure gestrippt, wobei eine Zinksulfatlösung erhalten wird.

Nach einem weiteren Kennzeichen der Erfindung wird der zweite organische Extrakt nach dem Abstrippen des Zn²⁺-Gehalts zur Abtrennung des Fe³⁺-Gehalts erneut mit Säure gestrippt, was vorteilhaft mit Salzsäure erfolgt.

Wenn die sauren Lösungen einen hohen Gehalt an freier Säure aufweisen, kann es vorteilhaft sein, sie vor der Extraktion einer Diffusionsdialyse zur Herabsetzung des Säuregehalts zu unterwerfen.

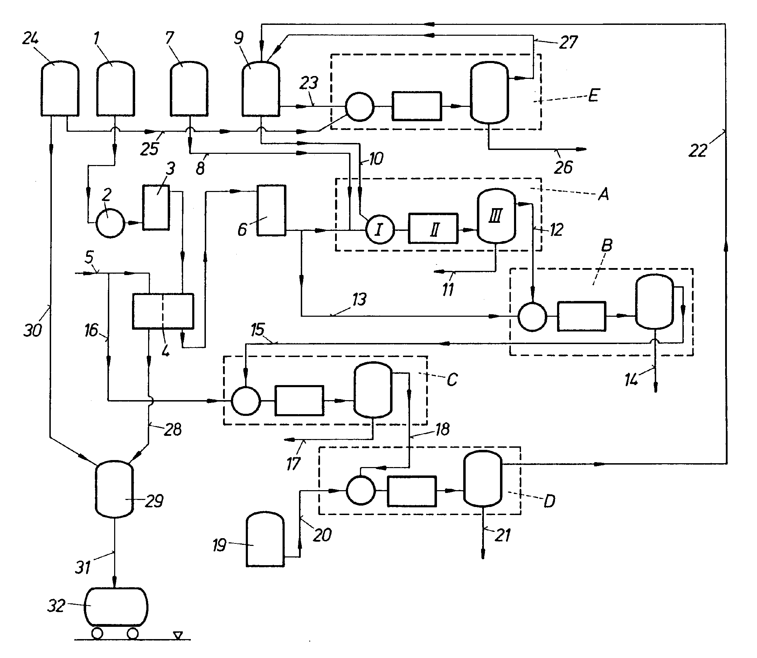

Die Erfindung wird im folgenden anhand der Zeichnung näher beschrieben, in der ein Blockschema einer Anlage zur Durchführung des erfindungsgemäßen Verfahrens dargestellt ist.

Aus einem Vorratsbehälter 1 wird verbrauchte, Fe und Zn enthaltende salzsaure Beizlösung über eine Förderpumpe 2 und ein Filter 3 (z.B. ein Aktivkohlefilter) einer Dialysatoreinheit 4 zugeführt, in der die Lösung gegen über die Leitung 5 zugeführtes Wasser zur Herabsetzung ihres Gehalts an freier Säure dialysiert wird. Die säureabgereicherte Lösung wird sodann über einen mit Fe-Schrott beschickten Tank 6, der vor allem der Reduktion Fe³⁺→Fe²⁺ dient, einer Extraktionsstufe A zugeführt, die in der Fließrichtung aus einer Mischpumpe I, einem Statikmischer II und einem Settler III besteht, wobei zwischen Statikmischer und Settler ein nicht dargestellter Koaleszer vorgesehen sein kann. Vor Eintritt in die Mischpumpe I wird der Lösung aus einem Laugenvorratstank 7 über die Leitung 8 Alkalilauge zudosiert, um den für die Extraktion gewünschten pH-Wert bzw. pH-Wertbereich einzustellen. Die Dosierung erfolgt vorteilhaft als Funktion des nach der Mischpumpe I abgefühlten pH-Werts. In der Mischpumpe I wird dieser Lösung eine organische, mit Wasser nicht mischbare Extraktionsmittelphase aus einem Vorratsbehälter 9 über die Leitung 10 zudosiert, die in bekannter Weise aus einem organischen Kationentauscher in einem organischen Lösungsmittel gebildet ist. Als Kationentauscher können z.B. organische Phosphorverbindungen, auch als Gemische metallspezifischer Ionentauscher eingesetzt werden, als Lösungsmittel z.B. Kerosin.

Die Extraktionsmittelphase kann weiterhin u.a. Lösungsvermittler und Stabilisatoren enthalten, z.B. Isodekanol oder andere langkettige Alkohole.

Der Konzentrationsbereich des Kationentauschers in der Extraktionsmittelphase liegt vorteilhaft bei 1 bis 50 %.

In der Extraktionsstufe A, die, z.B. bei hohen Metallkonzentrationen, auch mehrstufig ausgebildet sein kann, wird das Phasenverhältnis Lösung/Extraktionsmittelphase so eingestellt, daß eine optimale Abreicherung der Lösung an Fe und Zn sowie eine entsprechende Anreicherung der Extraktionsmittelphase erzielt wird. Gegebenenfalls kann die der Mischpumpe I zugeführte Lösung auch mit bereits abgereicherter Lösung verdünnt werden.

Aus dem Settler III wird einerseits eine wässerige, abgereicherte Lösung über die Leitung 11 abgezogen und, soweit sie nicht zur angegebenen Verdünnung benötigt wird, als Abwasser verworfen.

Anderseits wird aus dem Settler III die mit Fe²⁺, Fe³⁺ und Zn²⁺ beladene Extraktionsmittelphase abgezogen und über die Leitung 12 der Mischpumpe einer zweiten Extraktionsstufe B zugeführt, die entsprechend der ersten Extraktionsstufe aufgebaut ist.

In die Mischpumpe der zweiten Extraktionsstufe B wird weiterhin über die Bypaßleitung 13 frische Lösung zudosiert, der weiterhin (nicht dargestellt) wie in der Extraktionsstufe A Alkalilauge zur Einstellung des gewünschten pH-Werts bzw. pH-Wertbereichs zudosiert werden kann.

In der Extraktionsstufe B wird der pH-Wert so eingestellt, daß einerseits die Zn²⁺-Beladung der Lösung in die bereits beladene Extraktionsmittelphase und anderseits die Fe²⁺-Beladung der Extraktionsmittelphase in die wässerige Lösung geht.

Aus dem Settler der Extraktionsstufe B wird somit einerseits über die Leitung 14 eine wässerige FeCl₂-Lösung abgezogen, die z.B. als anorganisches Flockungsmittel weiterverwendet werden kann.

Anderseits wird über die Leitung 15 aus dem Settler der Extraktionsstufe B eine Extraktionsmittelphase abgezogen, die lediglich mit Fe³⁺ und Zn²⁺ beladen ist, und der Mischpumpe einer weiteren Extraktionsstufe C zugeführt, die wie die Extraktionsstufen A und B ausgebildet ist. In der Extraktionsstufe C wird die Extraktionsmittelphase mittels über die Leitungen 5 und 16 zugeführtem Wasser chlorionenfrei gewaschen. Das Waschwasser wird aus dem Settler der Extraktionsstufe C über die Leitung 17 abgezogen und die gewaschene Extraktionsmittelphase über die Leitung 18 der Mischpumpe einer weiteren Extraktionsstufe D zugeführt, die ebenfalls wie die Extraktionsstufen A, B und C aufgebaut ist und in der die Extraktionsmittelphase mittels Schwefelsäure gestrippt wird, die aus einem Vorratsbehälter 19 über die Leitung 20 zugeführt wird. Vorzugsweise wird ca. 20 bis 30 %ige Schwefelsäure eingesetzt; die Temperatur in der Extraktionsstufe D kann über Raumtemperatur liegen, z.B. bei bis zu etwa 60°C.

Aus dem Settler der Extraktionsstufe D wird über die Leitung 21 eine Zinksulfatlösung abgezogen, die Handelsqualität aufweist; die nunmehr nur noch mit Fe³⁺ beladene Extraktionsmittelphase geht über die Leitung 22, gegebenenfalls nach einer weiteren Wasserwäsche zur Sulfationenentfernung, zum Extraktionsmittelvorratstank 9 zurück.

Um auch das Fe³⁺ aus der Extraktionsmittelphase zu entfernen, ist eine fünfte Extraktionsstufe E vorgesehen, die wiederum wie die Extraktionsstufen A bis D aufgebaut ist und einerseits vom Extraktionsmittelvorratstank 9 her über die Leitung 23 mit Extraktionsmittel und anderseits von einem Salzsäurevorratstank 24 her über die Leitung 25 mit Salzsäure beschickt wird. Die Salzsäurekonzentration sollte zumindest 6N betragen, um den Fe³⁺-Gehalt auszustrippen. Aus dem Settler der Extraktionsstufe E wird einerseits über die Leitung 26 eine FeCl₃-Lösung abgezogen; die gestrippte Extraktionsmittelphase geht über die Leitung 27 zum Extraktionsmittelvorratstank 9 zurück.

Die im Dialysator 4 anfallende Salzsäure wird über die Leitung 28 einem Mischtank 29 zugeleitet und dort mit über die Leitung 30 aus dem Salzsäurevorratstank 24 zugeführter Salzsäure zur Bildung einer Mischsäure vermischt, die über die Leitung 31 einem Tankwagen 32 aufgegeben wird und z.B. als Metallbeize eingesetzt wird.

Die dargestellte und beschriebene Anlage bietet die Möglichkeit einer vollständigen, kontinuierlichen Aufarbeitung einer Fe- und Zn-haltigen, sauren Lösung. Hiebei wurden folgende praktische Ergebnisse erhalten:

Es wurde eine klargefilterte Abfallbeizlösung mit einem Gehalt von 56 g/l Zn, 85 g/l Fe und 4 % Salzsäure eingesetzt. Der Extraktionsstufe A wurden 100 l dieser Lösung aufgegeben, der pH-Wert mit 20 %iger NaOH auf 5 eingestellt und mit 1000 l einer 20 %igen Lösung von Di-2-äthyl-hexylphosphat (Hostarex PA 216) in Kerosin extrahiert. Die aus dem Settler der Extraktionsstufe A abgezogene wässerige Lösung wies einen Restgehalt von etwa 20 ppm Zn und etwa 760 ppm Fe auf; bei pH 4 liegen diese Werte bei etwa 580 ppm Zn und etwa 1430 ppm Fe. Der in Reaktionsstufe A beladene erste Extrakt wies eine Beladung von etwa 14 g/l Metall auf, davon 0,42 g/l Fe³⁺.

Der erste organische Extrakt wurde zusammen mit 170 l Abfallbeizlösung der Extraktionsstufe B aufgegeben und bei einem pH-Wert von 1,4 extrahiert. Die aus dem Settler der Extraktionsstufe abgezogene FeCl₂-Lösung enthielt 137,4 g/l Fe sowie 0,6 g/l Zn.

Der zweite organische Extrakt wurde in der Extraktionstufe C mit 300 l Wasser, das mittels H₂SO₄ auf einen pH-Wert von 1,4 angesäuert worden war, gewaschen, wobei die wässerige Phase im Kreislauf geführt wurde.

Anschließend wurde der gewaschene zweite Extrakt in der Extraktionsstufe D mit 120 l 25 %iger H₂SO₄ gestrippt; wiederum wurde die wässerige Stripplösung im Kreis gefahren. Aus dem Settler der Extraktionsstufe D wurde eine ZnSO₄-Lösung mit einem Gehalt von 124,5 g/l Zn und 5 ppm Fe abgezogen.

Die Erfindung ist auf die dargestellte und beschriebene Ausführungsform nicht beschränkt. So z.B. können jeweils beliebige Extraktionsanlagen (z.B. Kolonnen) eingesetzt werden. Weiterhin kann auch ohne Dialysator und ohne Fe-Schrott-Tank gefahren werden. Ebenso kann z.B. die Konzentration der erhaltenen ZnSO₄-Lösung, die aber vorteilhaft bei 100 bis 200 g/l Zn liegt, sowie die Verfahrensparameter der einzelnen Stufen, auch in Abhängigkeit vom eingesetzten Extraktionsmittel, variiert werden.

Weiterhin kann jede Extraktionsstufe, die in sich ein- oder mehrstufig sein kann, unabhängig voneinander zum Zudosieren von Säure, Lauge, frischem Extraktionsmittel und sonstigen Hilfsstoffen ausgerüstet sein.

## Patentansprüche

1. Verfahren zum Aufarbeiten von sauren Fe-haltigen Lösungen, insbesondere Abfallbeizlösungen, durch Flüssig/Flüssigextraktion mit organischen Ionentauschern, wobei aus Lösungen, die auch Zn enthalten, der Fe- und der Zn-Gehalt gemeinsam in einem ersten Extraktionsschritt extrahiert wird, dadurch gekennzeichnet, daß der dabei erhaltene erste, mit Fe³⁺, Fe²⁺ und Zn²⁺ beladene organische Extrakt zu einer erneuten Extraktion von frischer Lösung eingesetzt wird, bei der der Fe²⁺-Gehalt des ersten Extraktes gegen den Zn²⁺-Gehalt der frischen Lösung ausgetauscht wird, und daß aus dem zweiten organischen Extrakt der Zn²⁺-Gehalt durch Strippen mit Säure abgetrennt wird.

2. Verfahren nach Anspruch 1, dadurch gekennzeichnet, daß die erneute Extraktion bei einem gegenüber dem pH-Wert der ersten Extraktion veränderten pH-Wert durchgeführt wird.

3. Verfahren nach Anspruch 1 oder 2, dadurch gekennzeichnet, daß der zweite organische Extrakt mit Schwefelsäure gestrippt wird.

4. Verfahren nach einem der Ansprüche 1 bis 3, dadurch gekennzeichnet, daß der zweite organische Extrakt, nach dem Abstrippen des Zn²⁺-Gehalts, zur Abtrennung des Fe³⁺-Gehalts erneut mit Säure gestrippt wird.

5. Verfahren nach Anspruch 4, dadurch gekennzeichnet, daß das erneute Strippen mit Salzsäure erfolgt.

6. Verfahren nach einem der Ansprüche 1 bis 5, dadurch gekennzeichnet, daß die frischen Lösungen vor der ersten Extraktionsstufe einer Diffusionsdialyse zur Herabsetzung ihres Säuregehalts unterworfen werden.

## Claims

1. A process for working up acidic Fe containing solutions, in particular waste pickling solutions, by liquid/liquid extraction with organic ion exchangers, the Fe and Zn contents of solutions also containing Zn being extracted simultaneously in a first extraction step, characterised in that the fist organic extract resulting therefrom, charged with Fe³⁺, Fe²⁺ and Zn²⁺, is employed for the renewed extraction of fresh solution, wherein the Fe²⁺ content of the first extract is exchanged for the Zn²⁺ content of the fresh solution, an in that the Zn²⁺ content is separated from the second organic extract by stripping with acid.

2. The process according to claim 1, characterised in that the renewed extraction is carried out at a pH differening from the pH of the first extraction.

3. The process according to claim 1 or claim 2, characterised in that the second organic extract is stripped with sulphuric acid.

4. The process according to any of claims 1 to 3, characterised in that the second organic extract is renewedly stripped with acid for separating the Fe³⁺ content after the Zn²⁺ content has been stripped off.

5. The process according to claim 4, characterised in that the renewed stripping is done with hydrochloric acid.

6. The process according to any of claims 1 to 5, characterised in that the fresh solutions are submitted to diffusion dialysis for reducing their acid contents before the first extraction step.

## Revendications

1. Processus de retraîtement de solutions acides contenant du fer, en particulier de solutions de décapage usées, par extraction liquide/liquide avec échangeurs organiques d'ions, la teneur en Fe et en Zn de solutions aussi contenant du zinc étant extraite ensemble dans une première étape d'extraction, caractérisé en ce que le premier extrait organique ainsi obtenu, chargé de Fe³⁺, de Fe²⁺ et de Zn²⁺, est employé pour une nouvelle extraction de solution fraîche, au cours de laquelle la teneur du premier extrait en Fe²⁺ est remplacée par la teneur de la solution fraiche en Zn²⁺, et en ce que la teneur en Zn²⁺ est separée du deuxième extrait organique par stripage avec de l'acide.

2. Le processus selon la revendication 1, caractérisée en ce que la nouvelle extraction est effectuée à une valeur pH changée par rapport à la valeur pH de la première extraction.

3. Le processus selon la revendication 1 ou 2, caractérisé en ce que le deuxième extrait organique est stripé avec de l'acide sulfurique.

4. Le processus selon l'une des revendications 1 à 3, caractérisé en ce que, après le stripage de la teneur en Zn²⁺, le deuxième extrait organique est encore stripé avec de l'acide pour séparer la teneur en Fe³⁺.

5. Le processus selon la revendication 4, caracterisé en ce que le nouveau stripage est effectué avec de l'acide chlorhydrique.

6. Le processus selon l'une des revendications 1 à 5, caracterisé en ce que les solutions fraîches sont soumises à une dialyse de diffusion avant la première étape d'extraction pour reduire leur teneur en acide.
